Europäisches Patentamt

European Patent Office

Office européen des brevets

(19)

(11) Veröffentlichungsnummer : **0 289 491 B1**

(12) **EUROPÄISCHE PATENTSCHRIFT**

(45) Veröffentlichungstag der Patentschrift :
07.08.91 Patentblatt 91/32

(51) Int. Cl.⁵ : **F01N 7/14, F02B 77/11, F02F 1/42, F16L 59/06**

(21) Anmeldenummer : 86906910.4

(22) Anmeldetag : 14.11.86

(86) Internationale Anmeldenummer :
PCT/HU86/00059

(87) Internationale Veröffentlichungsnummer :
WO 88/03602 19.05.88 Gazette 88/11

(54) SCHICHTENWEISE AUFGEBAUTER WÄRMEDAMM.

(43) Veröffentlichungstag der Anmeldung :
09.11.88 Patentblatt 88/45

(45) Bekanntmachung des Hinweises auf die
Patenterteilung :
07.08.91 Patentblatt 91/32

(84) Benannte Vertragsstaaten :
BE DE FR GB IT NL SE

(56) Entgegenhaltungen :
CH-A- 370 491
DE-A- 2 549 256
DE-A- 2 657 276
FR-A- 2 271 493
GB-A- 1 546 661
US-A- 4 168 610
US-A- 4 501 302

(73) Patentinhaber : A4GM ENERGETIKAI
GEPGYARTO LEANYVALLALAT
Budafoki ut 70
H-1117 Budapest (HU)

(72) Erfinder : LOSONCI, Pál
Otthon u. 37
H-1118 Budapest (HU)

(74) Vertreter : Patentanwälte Viering & Jentschura
Steinsdorfstrasse 6
W-8000 München 22 (DE)

## Beschreibung

Die Erfindung betrifft eine schichtenweise aufgebaute Wärmedämmung zur Wärmeisolierung von Kanal-, Rohr- und Behälterwandungen, insbesondere von Abgaskanälen von Verbrennungskraftmaschinen, so z.B. von Dieselmotoren, wobei diese Wärmedämmung mindestens ein die Kanalwand umgebendes Plattenelement und mindestens eine Wärmeisolierungsschicht enthält, welche mit der Leitlinie des Kanals konzentrisch angeordnet ist und mindestens einen mit angestautem Gas, insbesondere Luft, ausgefüllten geschlossenen Spalt bildet, wobei mindestens eine Begrenzungswand dieses geschlossenen Spaltes von einer wärmebeständigen, mit mindestens einseitig abstehenden, nadelartigen abstandshaltenden Oberflächenelementen versehenen Stachelplatte gebildet ist.

Es ist bekannt, daß bei Verbrennungskraftmaschinen, insbesondere bei den verschiedenen Dieselmotoren nit Aufladung, die den Verbrennungsraum verlassenden Auspuffgase noch immer eine bedeutende Wärmeenergie enthalten. So werden diese Auspuffgase in den die Verbrennungsprodukte leitenden Kanälen (Abgaskanälen) des Zylinderkopfes und in den Auspuffgasleitungen auch mit Wasser gekühlt, um die Wärmebelastung der die Kanäle enthaltenden Konstruktionseinheiten auf einem erträglichen Niveau zu halten. Die Auspuffgasleitungen von Turboaufladungsmotoren werden gegebenenfalls zwar geringfügig wärmeisoliert, der Auspuffkanal des Zylinderkopfes und das Gasturbinengehäuse werden jedoch intensiv mit Wasser gekühlt. Der Wärmeinhalt der Auspuffgase wird in einem bedeutenden Maße durch das Kühlwasser entzogen, somit verringert sich ihre für eine nachfolgende Nutzung geeignete Wärmeenergiemenge bedeutend.

Die Erfindung beruht auf der Erkenntnis, daß die für eine nachfolgende Nutzung geeignete Wärmeenergie wesentlich erhöht werden könnte, wenn die das heiße Medium leitenden Kanäle mit einer effektiven und den darin herrschenden Betriebs- und Belastungsverhältnissen dauerhaft standhaltenden Wärmeisolierung versehen werden, welche eine übermäßige Wärmebelastung, d.h. eine Erwärmung der Kanäle und der diese aufnehmenden Konstruktionsteile, insbesondere der Gußgehäuse, auf eine unzulässig hohe Temperatur verhindern würde, ohne daß der hohe Wärmegehalt der entweichenden Gase durch eine intensive Wasserkühlung auf ein solches Maß verringert werden müßte, welches die Möglichkeit der nachfolgenden Nutzung vollkommen ausschließen oder zumindest beschränken würde. Diese Erkenntnis kann auf ein gegenüber dem Gebiet der Verbrennungskraftmaschinen weitaus weiteres technisches Gebiet verbreitet werden, da in den verschiedensten Wärmeenergiesystemen die Zwangsmaßnahme getroffen werden muß, gemäß welcher der hohe Wärmegehalt der heißen Medien, insbesondere Gase oder Flüssigkeiten, die ihre ursprüngliche Aufgabe bereits erfüllt haben oder dabei als Nebenprodukt entstehen, während ihrer Ableitung oder Zwischenspeicherung durch Abkühlung deshalb herabzusetzen ist, um eine übermäßige Wärmebelastung der Konstruktionselemente und Einheiten, welche mit dem Mediun hohen Wärmeinhalts in Berührung kommen oder von diesem durchströmt werden, zu vermeiden. Es ist leicht einzusehen, daß in den meisten dieser Fälle die Möglichkeiten und Aussichten einer nachträglichen (sekundären) Nutzung bedeutend erhöht werden könnten, wenn die auf die Umgebung wirkende Wärmebelastung durch eine entsprechend effektive Wärmeisolierung der betroffenen Kanäle, insbesondere Kanal-, Rohr- und Behälterwandungen, bei einer möglichst besten Bewahrung des Wärmeinhaltes des strömenden oder gespeicherten Mediums unter einem zugelassenen Grenzwert gehalten werden könnte. Erfahrungsgemäß besteht das Hauptproblen dabei darin, daß die betroffenen mediumleitenden Kanäle, die im allgemeinen eine komplizierte geometrische Linienführung nit einer Vielzahl von Krümmungen und Abzweigungen aufweisen, im Inneren von Guß- und andersartig gefertigten Körpern ausgebildet sind, infolgedessen eng und in den meisten Fällen schwer oder überhaupt nicht zugänglich sind. In Strömungsmaschinen und insbesondere in Verbrennungsmotoren ist darüberhinaus für die strömenden Medien ein recht häufig pulsierender, ziemlich hoher innerer Druck charakteristich, wodurch die Kanäle, insbesondere die Kanalwandungen, einer dynamischen Belastung ausgesetzt sind. Die Ausbildung von den erwähnten dynamischen, sowie Wärmebelastungen dauerhaft standhaltenden, einen geringen Platzbedarf aufweisenden, die Strömungseigenschaften des strömenden Mediums möglichst nicht beeinflussenden, effektiven Wärmeisolierungen bzw. Wärmedämmungen, durch deren Anwwendung die oben dargelegte Erkenntnis in einem breiten Kreis ausgeschöpft werden könnte, bereitet bis heute Schwierigkeiten.

Gute Wärmeisolierungseigenschaften aufweisende, schichtenweise aufgebaute Wärmedämmungen sind aus mehreren Quellen bekannt geworden. Die HU-PS 99.721 beschreibt zum Beispiel eine mit Luftschicht versehene Wärme- und Schallisolierung, bei welcher die Isolierung auf zellenartige Baueinheiten verteilt durch Zellenelemente realisiert ist und die einzelnen Isolierungseinheiten mit mindestens einer solchen Wand versehen sind, welche in Richtung der Schichtendicke der Lufthülle angeordnet ist und zugleich als die Dicke der Luftschicht sichernder Abstandshalter dient. Mit dieser Lösung kann um die mediumleitende Rohrleitung sogar eine mehrschichtige Wärmeisolierungs- (Schallisolierungs-) hülle angebracht werden.

Aus der DE-PS 2361036 ist ein schichtenweise ausgebildetes Wärmeisolierungselement bekannt, welches aus einer Kombination von um die mediumleitende Rohrleitung angeordneten konzentrischen Rohrelementen besteht. In den zylinderringförmigen Zwischenräumen zwischen den einzelnen Rohrelementen befinden sich angestaute Luftschichten. Die Rohrelenente sind mittels Abstandshalter in ihrer radialen Lage festgehalten, während die Möglichkeit der Anordnung der in bestimmter Länge vorgefertigten Wärmeisolierungselenente um verschieden lange Rohre und die erforderliche Dilatationsbewegungsfreiheit dadurch gesichert werden, daß das Längenmaß der Wärmeisolierungselemente infolge ihrer teleskopartigen Ausbildung in bestimmten Grenzen veränderbar ist.

Aus der GB-PS 1283329 ist eine insbesondere in Atomkraftwerken um den Außenmantel der einen großen Durchmesser aufweisenden Rohrleitungen anbringbare Wärmeisolierung bekannt, welche als Rohrbündel mehrschichtig ausgebildet ist, wobei die-ses Rohrbündel aus sich wabenförmig einander anpassenden Rohren besteht. Ein Vorteil dieser Lösung besteht darin, daß durch Einbau einer relativ geringen Materialmenge eine ausgezeichnete Wärmeisolierungswirkung erzielt wird, was dadurch noch gesteigert werden kann, daß nur ein geringer Anteil der Elemente der Wärmoisolierung mit der heißen Wandfläche in Berührung steht.

Die oben erwähnten bekannten Ausbildungen einer schichtenweise aufgebauten Wärmedämmung bzw. einer Wärmeisolierung sind jedoch zur Wärmeisolierung von Kanälen bzw. Rohrleitungen im Bereich von Richtungsänderungen, Winkelrohren, Anschlußstellen und räumlichen Gebilden nicht geeignet. Diese Ausführungsformen sind weiterhin auch zur Wärmeisolierung der Innenfläche von relativ engen Kanälen nicht geeignet, da sie einerseits einen großen Raumbedarf besitzen und andererseits gegenüber Druckbelastungen und dynamischen Belastungen nicht beständig sind und ihre Montage ebenfalls einen großen Platzbedarf aufweist.

Nach der CH-A-370491 ist bereits eine Wärmeisolation insbesondere für einen Moderatorkessel und die durch ihn hindurchgeführten Bauteile flüssigkeitsmoderierter Kernreaktoren bekannt, bei der die Kühlmittelführungsrohre des Moderatorkessels von einer moderatorgefüllten Schichtung aus Isolierfolien in Gestalt eines Wickels umgeschlossen wird, während der Moderatorkessel entweder an der Außenseite einen Isolierfolienwinkel oder an der Innenseite eine vorgeformte Isolierschichtung trägt. Die Abstände zwischen den Folien werden entweder durch köpereigene Ausstülpungen oder durch Zinken an der Folie gehalten. Zwar ist es nach dieser Ausführungform möglich, die Innenfläche von Kanälen zu isolieren ; jedoch bilden die Isolierfolien keinen geschlossenen Spalt, so daß der Spalt von der Moderatorflüssigkeit durchströmt werden kann, was im Vergleich mit einem geschlossenen Spalt eine geringere Wärmeisolierfähigkeit bedeutet.

Durch die Erfindung wird die Aufgabe gelöst, eine schichtenweise aufgebaute Wärmedämmung der eingangs erwähnten Art so auszubilden, daß sie zur guten Wärmeisolierung der Innenwand von mediumleitenden Kanälen mit möglichst geringen Strömungsverlusten und mit gleichzeitiger Sicherung einer großen mechanischen- und Wärmebelastbarkeit geeignet ist.

Dies wird erfindungsgemäß durch die Merkmale im Anspruch 1 erreicht.

Bevorzugte Ausgestaltungen der Erfindung sind in den Unteransprüchen angegeben.

Die die jeweilige, der wärmeisolierenden Kanalwand am nächsten liegende gasförmige Wärmeisolierungsschicht, insbesondere den Luftspalt begrenzende Stachelplatte kann unmittelbar an der Kanalwand oder bei anderen Ausführungsformen an einer die Kanalwand umhüllenden Isolationseinlage abgestützt sein. Da die Abstützung nur auf die punktartige Oberfläche der Stachelspitzen begrenzt ist, bilden sich unmittelbar wärmeleitende Verbindungen nur an vernachlässigbar kleinen Flächen aus. Die erfindungsgemäße Wärmedämmung stellt solche Wärmeisolierungen dar, deren mit dem in dem Kanal geführten strömenden Medium in Berührung stehende innerste Schicht durch mindestens eine glatte, mit geläppter Oberfläche versehene wärmebeständige Auskleidungsplatte gebildet ist.

Bei den an der Innenfläche der Kanäle ange-brachten, erfindungsgemäß ausgebildeten Wärme-dämmungen ist es von Vorteil, wenn diese entlang der Einlaufkanten des mediumleitenden Kanals mit einer den Strömungswiderstand verringernden Abrundung ausgebildet sind.

In bestimmten Fällen ist eine gegenüber Erosion-serscheinungen besonders widerstandsfähige Aus-bildung und Anwendung der erfindungsgemäßen, schichtenweise aufgebauten Wärmedämmung vorteilhaft. Zu diesem Zwecke kann die mit dem strömenden Medium unmittelbar in Berührung stehende Innenfläche der Auskleidungsplatte mit einem wärmebeständigen keramischen Belag versehen sein.

Die Wärmeisolierungsfähigkeit der Wärmedämmungen kann auch dadurch gesteigert werden, daß mindestens eine Oberfläche mindestens einer Stachelplatte geläppt (oberflächenpoliert) ist.

Nachstehend wird die Erfindung anhand von eini-gen Ausführungsbeispielen unter Bezugnahme auf die beigefügte Zeichnung näher erläutert.

In der Zeichnung zeigen :

Fig. 1 eine Detailskizze eines auf die Innenfläche eines im wesentlichen zylinderförmigen Kanals aufgebrachten Ausführungsbeispieles der erfin-dungsgemässen Wärmedämmung in Halb-schnitt,

Fig. 2-4 Detailskizzen von weiteren, auf die Innenfläche aufgebrachten Wärmedämmungen, deren Funktion und Anordnung der in Fig. 1 dargestellten entspricht,

Fig. 5 einen Schnitt mit der Darstellung von gewalzten, mit einseitig und zweiseitig abstehenden nadelartigen abstandshaltenden Oberflächenelementen versehenen Stachelplatten,

Fig. 6 einen Schnitt einer weiteren Ausführungsform des erfindungsgemäßen Wärmedämmung,

Fig. 7 ein hervorgehobenes Detail des auf die Mediumströmungsrichtung senkrechten Profilschnittes des erfindungsgemäßen Wärmedämmung, und

Fig. 8 und 9 eine Schnittskizze mit Darstellung von in längeren, stetigen Kanalabschnitten angeordneten erfindungsgemäßen Wärmedämmungen ausgebildeten Dilatationsspalten.

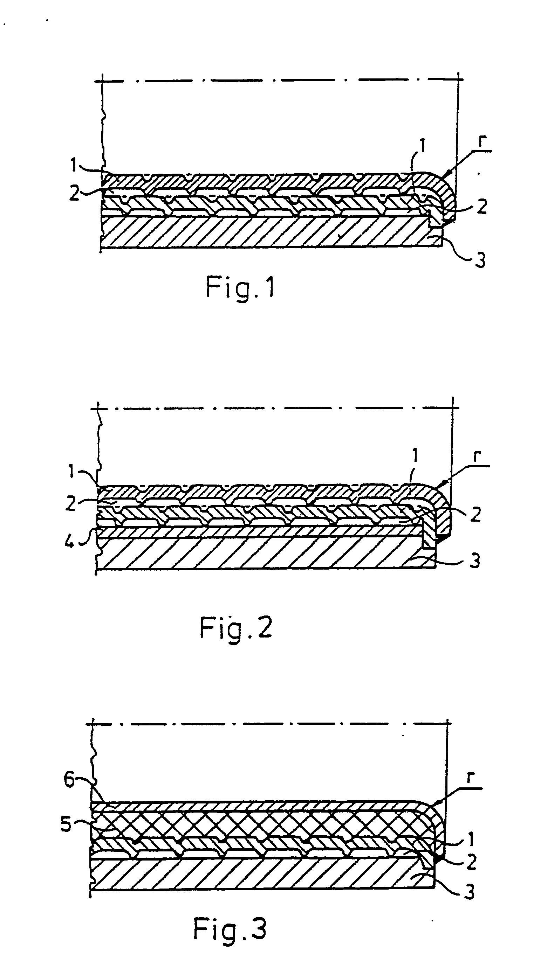

In den Figuren 1 bis 4 und 6 sind verschiedene Ausführungsbeispiele der erfindungsgemäßen, schichtenweise aufgebauten Wärmedämmung im Halbschnitt dargestellt, welche insbesondere zur innenseitigen Wärmeisolierung von mediumleitenden Kanälen mit Kreisprofil geeignet sind. Wie aus Fig. 1 ersichtlich ist, ist an einer Kanalwand 3 des Kanals von innen mit Hilfe entsprechender Werkzeuge eine sich der Kanalwand anpassende, im wesentlichen auf eine Zylinderform vorgeformte erste Stachelplatte 1 abgestützt, und an dieser ist eine ebenfalls zur Anpassung auf eine Zylinderform vorgeformte zweite Stachelplatte 1 abgestützt. Bei dem in der Fig. 1 rechten Einlaufende des Kanals sind die Stachelplatten 1 in Richtung der Einlaufkante abgerundet und aneinander angeschweißt. Der Rand der mit der Kanalwand 3 unmittelbar in Berührung stehenden ersten Stachelplatte 1 ist in einer in der Kanalwand 3 ausgebildeten stufenartigen Ausnehmung eng eingepaßt. Aus der Figur ist gut ersichtlich, daß auf diese Weise zwischen der Kanalwand 3 und der ersten Stachelplatte 1, sowie zwischen der letztgenannten und der inneren zweiten Stachelplatte 1 als Wärmeisolierungsschicht Luftspalte 2 ausgebildet sind, welche gegenüber dem in dem Kanal strömenden heißen Gasmedium, insbesondere Auspuffgas, gasdicht abgeschlossen sind. Die an der Einlaufkante ausgebildete Abrundung mit dem Radius r der inneren Stachelplatte 1 verringert den Strömungswiderstand auf vorteilhafte Weise. An der inneren Stachelplatte 1 ist eine entlang der Einlaufkante durch Schweißen befestigte Auskleidungsplatte (hier nicht dargestellt) — deren Durchmesser in ihrem zylindrischen Bereich kleiner als der der Stachelplatte 1 ist — ausgebildet.

In Fig. 2 ist eine ähnliche Ausbildung dargestellt, mit dem Unterschied, daß die erste Stachelplatte 1 nicht unmittelbar an der Kanalwand 3 abgestützt ist, sondern an einer in die Kanalwand eingepaßten und eine weitere Wärmeisolierungsschicht bildenden Isolationseinlage 4.

In Fig. 3 ist eine weitere Ausführungsform der Erfindung veranschaulicht, bei welcher zwischen der unmittelbar an der Kanalwand 3 abgestützten Stachelplatte 1 und der Auskleidungsplatte 6 als zusätzliche Wärmeisolierungsschicht eine Einsatzschicht 5 ausgebildet ist. Auch bei dieser Ausführungsform bildet der Luftspalt 2 zwischen der Kanalwand 3 und der Stachelplatte 1 eine äußerst effektive Wärmeisolierungsschicht.

Die Stachelplatten 1 der in den Fig. 1-3 dargestellten Ausführungsbeispiele der erfindungsgemäßen Wärmedämmung werden ausgehend von einem glatten Plattenmaterial durch Preßverfahren ausgebildet. Die von der Plattenoberfläche abstehenden nadelartigen abstandshaltenden Oberflächenelemente werden somit mit Hilfe eines entsprechenden Formwerkzeuges aus dem Plattenmaterial selbst herausgepreßt.

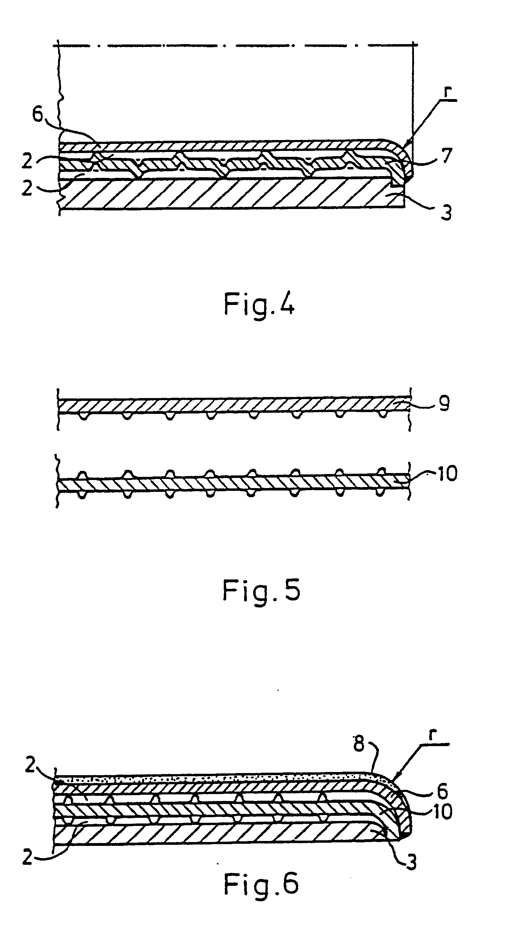

Bei der in Fig. 4 dargestellten Ausführungsform ist die Stachelplatte 7 mit mittels der gleichen Technologie gepreßten, jedoch zu beiden Seiten der Plattenoberfläche abstehenden nadelartigen abstandshaltenden Oberflächenelenenten versehen. Bei dieser Konstruktion stützen sich die Stacheln der Stachelplatte 7 einerseits unmittelbar an der Kanalwandung 3 und andererseits an einer Auskleidungplatte 6 ab, wodurch sich auf beiden Seiten der Stachelplatte 7 als Wärmeisolierungsschicht je ein Luftspalt 2 ausbildet. In Fig. 5 sind die Schnittskizzen von Stachelplatten 9 und 10 dargestellt, welche mittels einer von der obenbeschriebenen Technologie abweichenden Technologie, und zwar durch Walzen, gefertigt sind. Die Stachelplatte 9 ist mit von der Plattenoberfläche einseitig abstehenden nadelartigen Oberflächenelementen versehen, während die Stachelplatte 10 mit in beide Richtungen aus der Plattenoberfläche herausragenden nadelartigen Oberflächenelementen ausgebildet ist. In Fig. 6 ist ein Ausführungsbeispiel der erfindungsgemäßen Wärmedämmung dargestellt, welche mit einer durch Walzen gefertigten Stachelplatte 10 ausgebildet ist und in seinem sonstigen Konstruktionsaufbau dem in Fig. 4 dargestellten Ausführungsbeispiel entspricht. Eine Wärmedämmung mit einer den Erosionserscheinungen besonders widerstehenden und verschleißfesten Oberfläche und einer verbesserten Wärmeisolierungswirkung kann dadurch gewonnen werden, daß die innere, seitens des strömenden Mediums befindliche Fläche der Auskleidungsplatte 6 mit einem keramischen Belag 8 versehen wird. Die Wärmeisolierungseigenschaften der erfindungsgemäß ausgebildeten, schichtenweise aufgebauten Wärmedämmungen können durch weitere an sich bekannte Maßnahmen, wie z.B. das Läppen der Plattenoberflächen und die entsprechende Auswahl der verwendeten Konstruktionsmaterialien, weiter verbessert werden.

Das Konstruktionsmaterial der Stachelplatten 1 kann z.B. wärmebeständiger Stahl sein, gegebenenfalls auch irgendein anderes Material, so z.B. auch wärmebeständiger Kunststoff. Das Gleiche gilt auch für die Materialwahl der Isolationseinlage 4 und der Auskleidungsplatte 6. Als Einsatzschicht 5 kann z.B. Mineralwolle oder Schaumkunststoff verwendet werden.

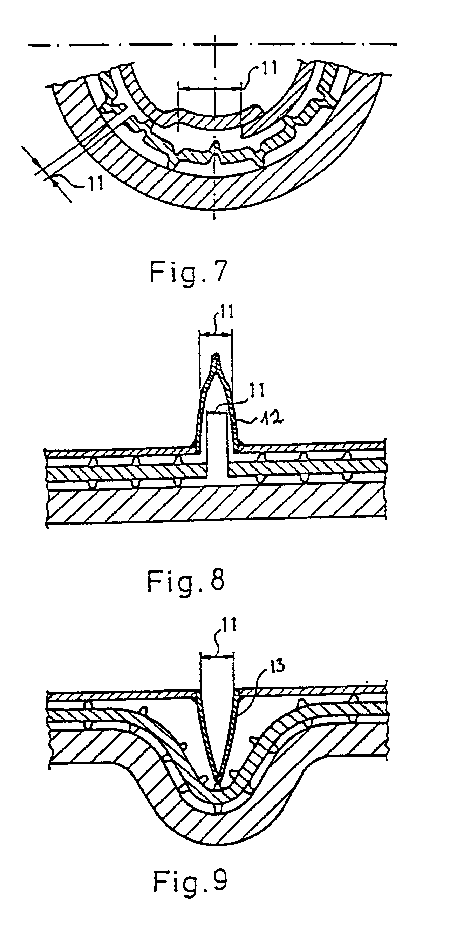

Da sich unter Betriebsbedingungen die an der Kanalwand angebrachte Wärmedämmung aufwärmt, ist es vorteilhaft und gegebenenfalls erforderlich, für die den schichtenartigen Aufbau realisierende Plattenelemente die Möglichkeit der Dilatationsbewegung in Mantelrichtung und in Längsrichtung zu gewährleisten. Zu diesen Zwecke werden wie z.B. auf die in der Fig. 7 dargestellte Weise (wobei Fig. 7 ein Querschnittsprofil des in Fig. 4 im Längsschnitt dargestellten Ausführungsbeispieles sein kann) für die Stachelplatteneinlage durch Aufschneiden in Richtung der Mantellinie und durch eine vorgepreßte Ausbildung des Überlappungsbereiches der Auskleidungsplatte Dilatationsspalte 11 ausgebildet.

In Fig. 8 ist ein Längsschnitt der erfindungsgemäßen Wärmedämmung dargestellt, bei welchem für die erwähnten Plattenelemente längsgerichtete Dilatationsspalte 11 durch längsgerichtete Unterbrechungen der Kontinuität der Elemente gesichert werden. Um ein Eindringen des strömenden heißen Mediums in die Luftspalte der Wärmedämmung zu vermeiden, wird die Gasdichtigkeit der Auskleidungsplatte durch Einbau von membranartigen Flanschen 12 erzielt. Dadurch wird natürlich der Strömungswiderstand erhöht, deswegen wird diese Ausbildung nicht für jeden Fall, sondern hauptsächlich für die Fälle empfohlen, wenn die Wärmeisolierung eines bereits vorhandenen Kanal durch nachträglichen Einbau der Wärmedämmung gesichert werden soll. Bei der Ausbildung von Kanälen, für welche bereits im Stadium ihrer Projektierung eine gemäß der Erfindung ausgebildete, schichtenweise aufgebaute Wärmedämmung vorgesehen ist, ist die Ausbildung gemäß Fig. 9 vorteilhaft, bei welcher für den den Dilatationsspalt 11 der Auskleidungsplatte gasdicht abschließenden Membranflansch 13 durch entsprechende lokale Ausweitung der Kanalwand derart Platz geschaffen wird, daß dieser den freien Durchströmungsquerschnitt nicht verengt.

Die durch die Anwendung der erfindungsgemäß ausgebildeten Wärmedämmung erzielte gute Wärmeisolierung der das Auspuffgas eines Dieselmotors mit Turboaufladung leitenden Kanäle erwirkt folgende positive Effekte :

Die in den Turbolader aus dem Motor eingeführte Wärmemenge erhöht sich um zehn bis fünfzehn Prozent, dadurch liefert der Turbolader eine größere Menge und einen höheren Druck aufweisende Luft in die Zylinder des Motors. Im Ergebnis dessen verringert sich der spezifische Kraftstoffverbrauch des Motors, andererseits verringert sich die Wärmebelastung der heißen Konstruktionsteile des Motors, wodurch die Lebensdauer des Motors größer wird. Durch die den Zylinderräumen des Motors zugeführte größere Menge und einen höheren Druck aufweisende Luft besteht die Möglichkeit der Erhöhung der Motorleistung. Darüberhinaus sind die Möglichkeiten einer sekundären Nutzung des noch immer hohen Wärmeinhaltes der entweichenden Auspuffgase ebenfalls günstiger, insbesondere bei mit Hochleistungsmotoren versehenen Großanlagen, Fahrzeugen, z.B. Dieselmotorschiffen. Die sekundäre Nutzung der Wärmeenergie kann z.B. für Hilfsantriebe, zum Betreiben von zusätzlichen Vorrichtungen, durch Erzeugung von Warmwasser oder Dampf erfolgen.

**Patentansprüche**

1. Schichtenweise aufgebaute Wärmedämmung zur Wärmeisolierung von Kanal-, Rohr- und Behälterwandungen, insbesondere von Abgaskanälen von Verbrennungskraftmaschinen und Turboaufladerturbinen, welche mindestens ein die Kanalwandung (3) umgebendes Plattenelement und mindestens eine zu der Leitlinie des zu isolierenden Kanals konzentrisch ausgebildete Wärmeisoliersschicht aufweist, wobei die Wärmeisoliersschicht mindestens einen mit angestautem Gas, insbesondere Luft ausgefüllten geschlossenen Spalt (2) bildet und mindestens eine Begrenzungswand dieses geschlossenen Spaltes (2) von einer wärmebeständigen, mit mindestens einseitig abstehenden, nadelartigen abstandshaltenden Oberflächenelementen versehenen Stachelplatte (1, 7, 9, 10) gebildet ist, dadurch gekennzeichnet

— daß die Stachelplatte (1, 7, 9, 10) an die innere Form der Kanalwandung (3) angepaßt und daran abgestützt ist, beim Einlaufquerschnitt des Kanals im Falle von einem geschlossenen Spalt (2) die Stachelplatte (1, 7, 9, 10) dicht an die Kanalwandung (3) angebördelt ist, während bei mehreren geschlossenen Spalten (2) die die einzelnen wärmeisolierenden Schichten trennenden gewalzten Stachelplatten mit massiven Stacheln gasdicht aneinander befestigt und dicht an die Kanalwandung (3) angebördelt sind,

— daß die Wärmedämmung an ihrer der Kanalwandung (3) entgegengesetzten Seite mit einer geläppten Auskleidungsplatte (6) abgeschlossen ist, die beim Einlaufquerschnitt des Kanals gasdicht befestigt ist,

— daß die Wärmedämmung im inneren Einlaufquerschnitt der Kanalwandung bzw. am Anfang der jeweiligen Wärmedämmungabschnitte je eine Abrundung aufweist,

— daß die Wärmedämmung in Abhängigkeit von der Dicke der Auskleidungsplatte (6) Doppelmembran-Dilatations- und Versteifungselemente (12, 13) aufweist, wobei die Membranen dieser Elemente aneinander bzw. an der Auskleidungsplatte (6) gasdicht angeschlossen sind, und

— daß die Stachelplatten (1, 7, 9, 10) und die Auskleidungsplatte (6) unter Einfügung von Dilatationsspalten derart aneinander angeschlossen sind, daß sie dicht aufeinander verschiebbar sind.

2. Schichtenweise aufgebaute Wärmedämmung nach Anspruch 1, dadurch gekennzeichnet, daß mindestens zwei zueinander konzentrisch angeordnete Luftspalte (2) vorgesehen sind, wobei das diese voneinander trennende dazwischenliegende Plattenelement aus einer Stachelplatte (7, 10) besteht, welche mit von der Plattenoberfläche beidseitig abstehenden, nadelartigen, abstandshaltenden Oberflächenelementen versehen ist.

3. Schichtenweise aufgebaute Wärmedämmung nach einem der Ansprüche 1 und 2, dadurch gekennzeichnet, daß die Stachelplatte (1, 7, 9, 10) an einer die Kanalwandung (3) umhüllenden Isoliereinlage (4) abgestützt ist.

4. Schichtenweise aufgebaute Wärmedämmung nach einem der Ansprüche 1 bis 4, dadurch gekennzeichnet, daß die mit dem strömenden Medium unmittelbar in Berührung stehende Innenfläche der Auskleidungsplatte (6) mit einem wärmebeständigen keramischen Belag (8) versehen ist.

5. Schichtenweise aufgebaute Wärmedämmung nach einem der Ansprüche 1 bis 4, dadurch gekennzeichnet, daß in der jeweiligen Wärmeisolierschicht, vorzugsweise zwischen der Auskleidungsplatte (6) und der dieser am nächsten liegenden Stachelplatte (1), eine wärmeisolierende Einsatzschicht (5) angeordnet ist.

6. Schichtenweise aufgebaute Wärmedämmung nach einem der Ansprüche 1 bis 5, dadurch gekennzeichnet, daß mindestens eine Oberfläche mindestens einer Stachelplatte (1, 7, 9, 10) geläppt ist.

## Claims

1. Layer-type heat barrier for thermal insulation of pipe, tube and container walls, in particular exhaust gas pipes of internal combustion engines and turbocharger turbines, comprising at least one plate element surrounding the wall of the pipe (3) and at least one thermal insulating layer, which is arranged concentrically to the directrix of the pipe to be thermally insulated, the insulating layer forming at least one closed space (2) filled with accumulated gas, especially air, with at least one limiting wall of said closed space (2) being formed by a heat resistant spiked plate (1, 7, 9, 10) provided with needle-like spacing elements on the surface which project at least on one side from the plate, characterized in that

— the spiked plate (1, 7, 9, 10) is adapted to the inner form of the pipe wall (3) and supported by the latter, and that at the throat cross section, in case of one closed space (2) the spiked plate (1, 7, 9, 10) is closely flanged to the pipe wall (3), whereas in case of several closed spaces (2) the rolled spike plates with massive spikes separating the individual thermal insulating layers are attached to each other impermeably to gas and are closely flanged to the pipe wall (3),

— the thermal insulation at its side opposite to the pipe wall (3) is closed by a lapped coating plate (6) which is mounted impermeably to gas at the throat cross section of the pipe,

— the thermal insulation shows one rounded part in the inner throat cross section of the pipe wall and at the beginning of the respective thermal insulation sections, respectively,

— the thermal insulation, dependent on the thickness of the coating plate (6), shows double-diaphragm-dilatation and- stiffening elements (12, 13), the diaphragms of said elements being interconnected or connected to the coating plate respectively impermeably to gas, and that

— the spiked plates (1, 7, 9, 10) and the coating plate (6) are connected with each other under insertion of dilitation spaces in such a way that they are displaceable closely upon each other.

2. Layer-type heat barrier according to claim 1, characterized in that at least two air spaces (2) are provided which are arranged concentrically to each other, the inserted plate element separating them from each other consisting of a spiked element (7, 10) provided with needle-like spacing surface elements projecting on both sides of the surface of the plate.

3. Layer-type heat barrier according to one of claims 1 and 2, characterized in that the spiked plate (1, 7, 9, 10) is supported at an insulating insertion (4) surrounding the pipe wall (3).

4. Layer-type heat barrier according to one of claims 1 to 4, characterized in that such inner wall of the coating plate (6) which is immediately in touch with the flowing medium is provided with a heat resistant ceramic cover (8).

5. Layer-type heat barrier according to one of claims 1 to 4, characterized in that in the respective thermal insulating layer, preferably between the coating plate (6) and the spike plate (1) which is arranged next to the latter, a thermal insulating insertion layer (5) is placed.

6. Layer-type heat barrier according to one of the claims 1 to 5, characterized in that at least one surface of at least one spike plate (1, 7, 9, 10) is lapped.

## Revendications

1. Barrière thermique en couches pour l'isolation thermique de parois de canaux, de tuyaux et de récipients, en particulier de canaux d'échappement des gaz de machines à combustion interne et de turbines à turbocompresseur, barrière qui au moins dispose d'un élément de plaque entourant la paroi du canal (3) et au moins d'une couche à isolation thermique formée de façon concentrique à la directrice du canal à isoler, la couche à isolation thermique formant au moins une fente fermée (2) remplie du gaz amassé, en particulier de l'air, et où au moins une paroi de limitation de cette fente fermée (2) est formée par une plaque à pointes (1, 7, 9, 10) thermostable munie d'éléments aciculaires de surface conservant l'espacement, caractérisée

— en ce que la plaque à pointes (1, 7, 9, 10) est adaptée à la forme interne de la paroi du canal (3) et y est etayée, en ce que lors de la couche transversale de l'entrée du canal au cas où une fente soit fermée, la plaque à pointes (1, 7, 9, 10) est bordée étroitement à la paroi du canal (3), tandis que lors de plusieurs fentes fermées (2) les plaques à pointes laminées, ayant des pointes massives et séparant les couches individuelles calorifuges, sont fixées les unes aux autres imperméables aux gaz et bordées étroitement à la paroi du canal (3)

— en ce que la barrière thermique est obturée à son côté opposée à la paroi du canal (3) avec une plaque de revêtement (6) lobée, qui est fixée imperméable aux gaz à la couche transversale de l'entrée

— en ce que la barrière thermique dispose respectivement d'un arrondi à la couche transversale de l'entrée interne de la paroi du canal ou bien au début des sections à barrière thermique respectives

— en ce que la barrière thermique dispose d'éléments de dilatation à membrane double et d'éléments de renforcement (12, 13) dépendant de l'épaisseur de la plaque de revêtement (6), les membranes de ces éléments étant fixées de manière imperméable aux gaz les unes aux autres ou bien à la plaque de revêtement (6), et

— en ce que les plaques à pointes (1, 7, 9, 10) et la plaque de revêtement (6) sont attachées avec la mise en place de fentes de dilatation de telle manière qu'elles sont étroitement déplaçables les unes sur les autres.

2. Barrière thermique en couches selon la revendication 1, caractérisée en ce qu'il est prévu au moins deux entrefers (2) groupés de façon concentrique l'un par rapport à l'autre, l'élément de plaque qui les sépare et qui se trouve au milieu des deux étant composé d'une plaque à pointe (7, 10), barrière thermique munie d'éléments de surface aciculaires et conservant l'espacement qui s'écartent des deux côtés des surfaces de la plaque.

3. Barrière thermique en couches selon l'une des revendications 1 ou 2, caractérisée en ce que la plaque à pointes (1, 7, 9, 10) est étayée à une insertion d'isolement (4) revêtant la paroi du canal (3).

4. Barrière thermique en couches selon l'une des revendications 1 à 4, caractérisée en ce que la face intérieure de la plaque de revêtement (6) étant directement en contact avec le milieu coulant est munie d'une couche céramique (8) thermostable.

5. Barrière thermique en couches selon l'une des revendications 1 à 4, caractérisée en ce qu'une couche d'insertion (5) calorifuge est placée dans la couche à isolation thermique respective, préférablement entre la plaque de revêtement (6) et la plaque à pointes (1) la plus proche à celle-là.

6. Barrière thermique en couches selon l'une des revendications 1 à 5, caractérisée en ce qu'au moins une surface d'au moins une plaque à pointes (1, 7, 9, 10) est lobée.

Fig.1

Fig.2

Fig.3

Fig.4

Fig.5

Fig.6

Fig. 7

Fig. 8

Fig. 9